# EUROPEAN PATENT SPECIFICATION

(11) **EP 1 520 931 B1**
(45) Date of publication and mention of the grant of the patent: **22.09.2010**
(21) Application number: 04021887.7
(22) Date of filing: 15.09.2004
(51) Int. Cl.: E01C 7/26, E01C 11/16, C03B 37/012

(54) **Additive for reinforcing bitumen matrices, method of production of said additive, bitumen matrix reinforced with said additive and method of production of said bitumen matrix**
Additiv zur Verstärkung von bituminösem Mischgut, Verfahren zur Herstellung dieses Additives, dieses Additiv enthaltendes bituminöses Mischgut und Verfahren zur Herstellung dieses Mischgutes
Additif pour le renforcement de produits enrobés bitumineux, procédé de fabrication dudit additif, enrobé bitumineux contenant le dit additif et procédé de fabrication dudit enrobé

(30) Priority: 30.09.2003 IT MI20031878
(43) Date of publication of application: 06.04.2005
(73) Proprietor: Saint-Gobain Technical Fabrics Europe, 73000 Chambéry (FR)
(72) Inventor: Ferrante, Antonio, 20045 Besana Brianza (Milano) (IT)
(74) Representative: Muller, René

(56) References cited:
- EP-A- 0 690 173
- EP-A- 0 798 345
- DE-A1- 4 024 767
- GB-A- 1 438 491
- US-A- 5 028 266
- US-A- 5 945 134
- US-B1- 6 384 116

## Description

The present invention relates to an additive particularly suitable for reinforcing bitumen matrices, and to the relative method of preparation. The same invention is also extended to the bitumen matrix reinforced with said additive and to the method for producing said bitumen matrix.

The field of application of the present invention is that of bituminous concretes or bitumen matrices, constituted by a mixture of bitumen, aggregates and fillers.

These matrices, particularly due to their use in the preparation of road surfaces (micro-surfaces, wear surfaces, draining surfaces and the like), require specific properties of mechanical resistance.

Conventionally, reinforcement of bitumen matrices is obtained by adding, to the bitumen mix, yarns of vegetable fibres (such as cellulose, jute and the like), the main drawback of which is represented by their high capacity to absorb humidity. In time vegetable fibres tend to deteriorate and lose their ability to adhere to the bitumen matrix, which for this reason is unable to preserve the desired degree of mechanical stability.

Moreover, as vegetable fibres are not heat-stable, heat preparation of the bitumen matrix causes part of these fibres to be incinerated and destroyed.

Added to this is the fact that, due to their vegetable nature, the fibres tend to absorb the bitumen, subsequently releasing it after the surface has been laid, causing irregularities to form on said surface. A further drawback of the vegetable fibres is that they are dispersed into the environment in the form of dust, thereby causing damage to said environment and loss of the quantity of filler added.

With the object of contributing towards the reinforcement of conventional bitumen matrices, after the vegetable fibre filler has been added, a further reinforcing agent, normally constituted by polymers (such as ethylene-vinyl amide or ethylene-vinyl acetate) is added to the bitumen mix.

The drawback of this conventional production method is represented by the fact that the different reinforcing agents (vegetable fibres and polymers) must be added separately at different times, which considerably prolongs the production times. The conventional preparation method referred to herein is also particularly burdensome and complex, and requires special equipment in order to obtain the desired bitumen matrix.

The document EP-A-0798345 discloses an additive for reinforcing bitumen matrices including a charge of glass fibres. The document GB-A-1438491 discloses a reinforced bitumen felt comprising a saturated bitumen fibre felt, e.g. paper, coated with a coating material, e.g. stabilized bitumen, on both sides and having a layer of non-woven glass fibre mesh embedded in the coating on one side.

The main object of the present invention is to provide a new additive to reinforce bitumen matrices which, compared to currently used additives, offers improved properties of mechanical resistance and stability of the final product, both in terms of preventing absorption of water and for improved thermal resistance.

A further object of the invention is to provide a reinforcing additive of the aforesaid type, which also has a dual effect (that is, capacity to offer a function of reinforcement and capacity to modify the chemical composition of the bitumen), although without requiring the known operations and conventional equipment, additional with respect to those utilized to obtain reinforcement of the bitumen matrix.

Yet another object of the invention is to supply a reinforcing additive which, unlike known additives, does not cause phenomena of dispersion into the environment.

These and other objects are obtained with the reinforcement additive, the relevant preparation method, the method for preparing bitumen matrices and the bitumen matrices thus obtained, according to claims 1, 10, 11 and 12 respectively. Some preferred embodiments of the invention are set forth in the remaining claims.

As compared to conventional products, the additive of the invention offers the advantage that it does not absorb humidity and is resistant to temperatures, thus stabilizing absorption of the bitumen and maintaining the required properties of mechanical resistance of the bitumen matrix, even after long periods of time.

Added to this is the fact that, thanks to the presence of the polymer film containing the pellets, the glass yarn is not dispersed into the environment.

A further important advantage is represented by the fact that, owing to the final structure of the additive in the form of a composition of glass yarn and polymer, it requires neither separate operations, nor special equipment in order to be added to the bitumen matrix, with advantages also in terms of production yield.

Moreover, due to the increased density of the additive of the invention compared to known vegetable fibres, it is easier to meter, to the advantage of obtaining an end product with an optimum composition.

These and other objects are obtained with the additive, the bitumen matrix and the method of the invention, some non-limiting examples of which are illustrated in the figures below. In these:
Figure 1 shows the additive of the invention, as it appears ready for use:
Figure 2 shows in a longitudinal section a pellet of the additive of Figure 1;
Figures 3 and 4 respectively show the methods to prepare the additive of the previous figures and the bitumen matrix of the invention.

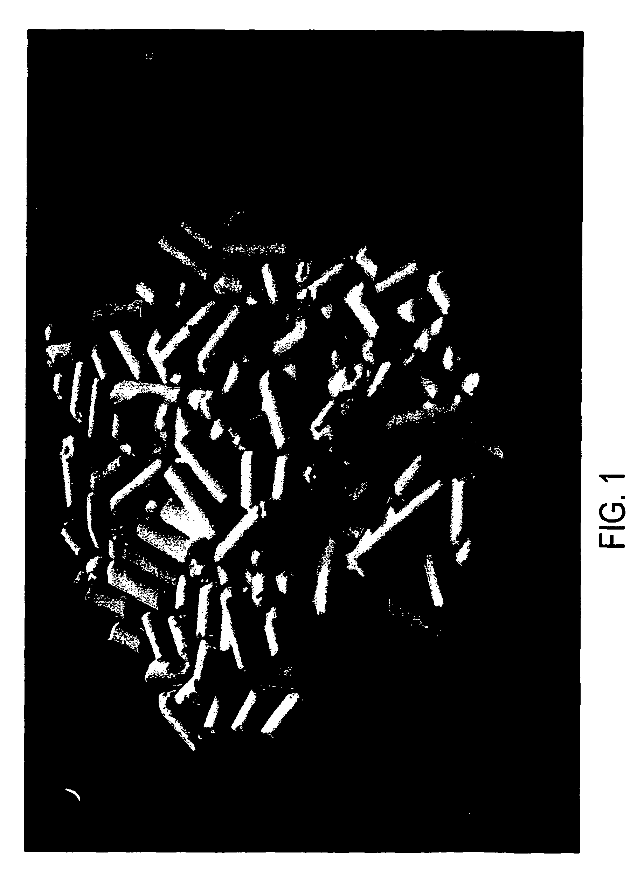

The additive of the invention is constituted by pellets, i.e. the small cylinders 1 of Figure 1, in turn comprising an inner core 2 composed of a charge of E-glass yarns, and an outer film 3 to contain this charge, constituted by a heat-meltable material (preferably ethylene-vinyl amide or ethylene-vinyl acetate). In particular, the inner core 2 of the pellet 1 is constituted by a cold and low pressure-prepared agglomerate of E-glass yarn, that is, a glass indicated for the preparation of reinforcing yarns.

According to the invention, other specific yarns to control absorption of the bitumen are added to this E-glass yarn. Those preferred for the invention are E-glass yarns with a urea binder. Optimal, although not binding for the invention, are the glass yarns having a diameter of 10-14 µ and a length ranging from 500 µ to 5 mm.

The outer film 3 of the pellets 1 is constituted by an ethylene-vinyl amide or ethylene-vinyl acetate polymer with low melting point (melting temperature preferably below 100°C), having the function of preventing the material of the core 2 from being dispersed into the environment.

The proportion in weight of the material forming the core 2 and the film 3 of the individual pellets 1 is preferably 25-75% of the material of the core 2 and 1-8% of the film 3, preferably 2-4%.

Pellets with a diameter of approximately 4-8 mm and a length of 4-15 mm are thereby obtained, as a function of the type of system utilizing them and of the programmed mixing time.

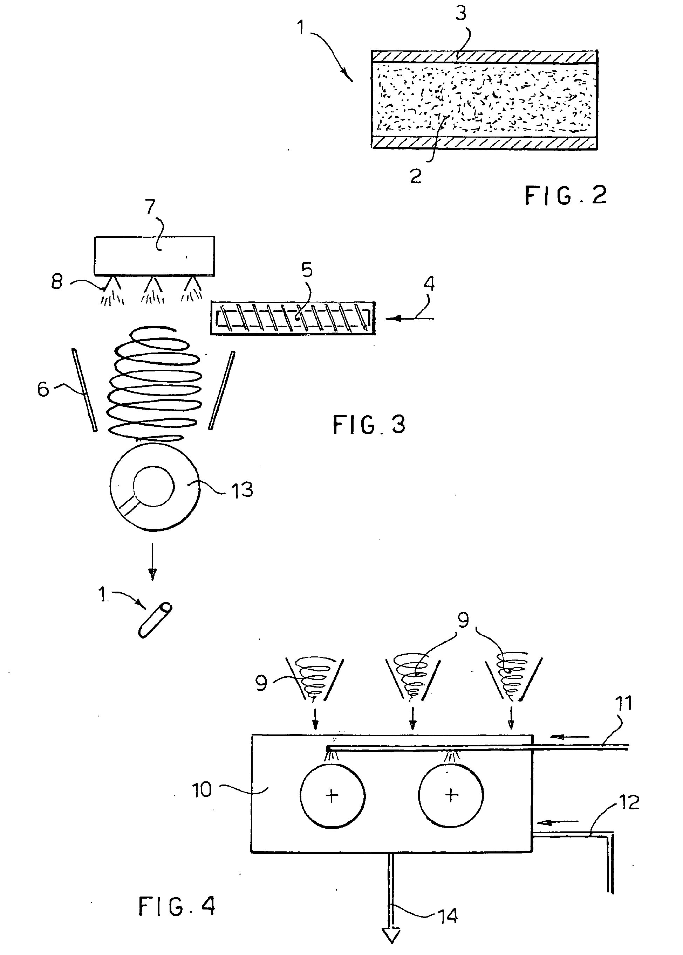

When preparing the additive of the invention, as shown in Figure 3, the mixture 4 of the E-glass yarns which form the core 2 of the pellets 1 is conveyed by an screw 5 towards a hopper 6 where, by means of a nebulization system 7, the binder 8 which forms the film 3 is metered and applied. Upon delivery from the hopper 6 the resulting product is made to pass through a die 13, from which the pellets 1 are delivered.

Advantageously, according to the invention, with the friction produced by the die 13 temperatures of around 50°C are produced, thanks to which the polymer melts, winding around the material 2 of the pellets 1 in the form of a coating film 3.

The preparation of the bitumen matrix 14, as shown in Figure 4, entails weighing of the aggregates 9 and their introduction into the heated mixer 10 (heating temperature of around 160°C), together with the bitumen 11 and, simultaneously, with the additive 12 formed of the pellets 1. This addition is carried out by introducing the pellets 1 directly into the production systems of the bitumen matrices, using the same machines which currently meter and inject the bitumen flock.

Upon contact with the heat, the film in heat-meltable material 3 which coats the pellets 1 dissolves, thereby modifying the bitumen and simultaneously releasing the glass yarn. The latter is then put in the condition to perform its function of reinforcement or micro-texture of the bitumen matrix, also stabilizing retention of the bitumen thanks to its absorption capacities. On its part, being a mineral product, the E-glass does not undergo any alterations at the processing temperatures of the bitumen matrix.

As the specific surface of the additive is high, even small quantities of product cover large surfaces, thereby ensuring reinforcement of even very thin layers of bituminous concretes.
All the binders used are compatible with the bitumens and, also for this reason, the properties of the additive of the invention make it extremely valid to withstand the phenomenon of aggregate separation in relatively thin road surfaces.

The use of this product makes it possible to simultaneously obtain several advantages to improve a bitumen matrix, conventionally obtainable only with the use of different products. These advantages include:
- the reinforcing effect due to formation of a micro-texture inside the mass of the bitumen matrices, providing the concrete with properties of elasticity and resistance;
- modification of the composition of the concrete, with improvement of the quality of the bitumen through addition of the ethylene-vinyl amide or ethylene-vinyl acetate polymer, thereby obtaining bitumen matrices with improved performances;
- the possibility to control absorption of the bitumen, which is thereby withheld effectively during the production phases of the concrete, preventing effects of running and disconnection of the bituminous surface after it is laid;
- the containing effect provided by the film 3, thanks to which dispersion into the environment of the volatile material 2 is prevented.

This additive can be used in all the continuous and discontinuous production units, with the use of the usual equipment normally used to add the various reinforcement fibres into concretes.

Due to the concentrated nature of the additive of the invention, this allows optimization of the concrete mixing times, obtaining improved quality and greater productivity.

Finally, when the additives of the invention come into contact with the hot aggregates of the concrete, thanks to the low melting temperature of the ethylene-vinyl amide or ethylene-vinyl acetate polymer constituting the film 3, this dissolves, thereby releasing the glass yarn which exerts its micro-texture reinforcing action and retains the bitumen, due to the fact that the latter is coated by specific urea/thermoplastic binder. On its part, dissolution of the ethylene-vinyl amide or ethylene-vinyl acetate polymer modifies the bitumen, increasing its adhesion strength to the aggregates.

## Claims

1. Additive for reinforcing bitumen matrices, **characterized in that** it is constituted by pellets (1) comprising a core (2) composed of a charge comprising E-glass yarns and an outer film (3) of a heat-meltable polymer material to contain the said charge.

2. Additive as claimed in claim 1, **characterized in that** said E-glass yam is constituted by a cold and low pressure-prepared agglomerate of E-glass yam.

3. Additive as claimed in claims 1 or 2, **characterized in that** the heat-meltable material has a melting temperature below 100°C.

4. Additive as claimed in one or more of the previous claims, **characterized in that** said heat-meltable material is an ethylene-vinyl amide or ethylene-vinyl acetate polymer.

5. Additive as claimed in one or more of the previous claims, **characterized in that** said charge also contains E-glass yarns with a urea binder.

6. Additive as claimed in one or more of the previous claims, **characterized in that** said glass yarns have a diameter of 10-14 µ and a length ranging from 500 µ to 5 mm.

7. Additive as claimed in one or more of the previous claims, **characterized in that** said pellets (1) comprise 25-75% by weight of the material forming said core (2) and 1-8% by weight of the polymer forming said film (3).

8. Additive as claimed in claim 7, **characterized in that** said pellets (1) contain 2-4% by weight of the film (3).

9. Additive as maimed in one or more of the previous claims, **characterized in that** the pellets (1) have a diameter of 4-8 mm and a length of 4-15 mm.

10. Method for the preparation of the additive as claimed in one or more of the previous claims, **characterized in that** friction heating melting of said heat meltable polymer material is carried out by passing said material through a die, so as to determine the formation of pellets (1) obtained by winding said molten material in the form of a film (3) coating the material of said core (2).

11. Method for the preparation of a bitumen matrix with the additive as claimed in once or more of claims 1 to 9, **characterized in that** it heating of said film of heat-meltable material (3) which coats the pellets (1) is carried out, by dissolving said film in order to release the material of the said core (2), which thereby modifies the bitumen and simultaneously releases the glass yarn.

12. Bitumen matrix, **characterized in that** it is obtained with the additive and with the method as claimed in one or more of the previous claims.

## Patentansprüche

1. Zusatzstoff zur Verstärkung von Bitumenmatrizen, **dadurch gekennzeichnet, dass** dieser durch Pellets (1) gebildet ist, umfassend einen Kern (2), der aus einer Charge zusammengesetzt ist, die E-Glasgarne umfasst und einem äußeren Film (3), der durch Hitze schmelzbares polymeres Material umfasst, um die Charge zu beinhalten.

2. Zusatzstoff nach Anspruch 1, **dadurch gekennzeichnet, dass** die E-Glasgarne aus im Kalt- und Niederdruckverfahren hergestellten Agglomeraten aus E-Glasgarnen erzeugt ist.

3. Zusatzstoff nach Anspruch 1 oder 2, **dadurch gekennzeichnet, dass** das durch Hitze schmelzbare Material eine Schmelztemperatur von unter 100 °C aufweist.

4. Zusatzstoff nach einem oder mehreren der vorhergehenden Ansprüche, **dadurch gekennzeichnet, dass** das durch Hitze schmelzbare Material ein Polymer aus Ethylenvinylamid oder aus Ethylenvinylacetat ist.

5. Zusatzstoff nach einem oder mehreren der vorhergehenden Ansprüche, **dadurch gekennzeichnet, dass** die Charge auch E-Glasgarne mit einem Harnstoff-Bindemittel enthält.

6. Zusatzstoff nach einem oder mehreren der vorhergehenden Ansprüche, **dadurch gekennzeichnet, dass** die Glasgarne einen Durchmesser von 10 - 14 µ und eine Länge in einem Bereich von 500 µ bis 5 mm aufweisen.

7. Zusatzstoff nach seinem oder mehreren der vorhergehenden Ansprüche, **dadurch gekennzeichnet, dass** die Pellets (1) 25 - 75 % Gewichtsanteil Material, die den Kern (2) bilden und 1 - 8 % Gewichtsanteil Polymer, die den Film (3) bilden, umfassen.

8. Zusatzstoff nach Anspruch 7, **dadurch gekennzeichnet, dass** die Pellets (1) zu 2 - 4 % Gewichtsanteil den Film (3) beinhalten.

9. Zusatzstoff nach einem oder mehreren der vorhergehenden Ansprüche, **dadurch gekennzeichnet, dass** die Pellets (1) einen Durchmesser von 4 - 8 mm und eine Länge von 4 - 15 mm aufweisen.

10. Verfahren zur Herstellung des Zusatzstoffes nach einem oder mehreren der vorhergehenden Ansprüche, **dadurch gekennzeichnet, dass** das Schmelzen durch Reibungswärme des durch Hitze schmelzbarem polymeren Materials durch das Durchleiten des Materials durch ein Werkzeug durchgeführt wird, um die Form der Pellets (1) zu bestimmen, die durch Umwinden des geschmolzenen Materials in die Form eines Films (3) zur Beschichtung des Materials des Kerns (2) erzeugt wird.

11. Verfahren zur Herstellung einer Bitumenmatrix mit dem Zusatzstoff nach einem oder mehreren der vorhergehenden Ansprüche 1 bis 9, **dadurch gekennzeichnet, dass** dieses eine Erhitzung des Films des durch Hitze schmelzbaren Materials (3), der die Pellets (1) beschichtet, durchführt, die den Film löst, um das Material (2) des Kerns freizugeben, was dadurch den Bitumen modifiziert und gleichzeitig das Glasgarn freigibt.

12. Bitumenmatrix, **dadurch gekennzeichnet, dass** diese mit dem Zusatzstoff und mit dem Verfahren nach einem oder mehreren der vorhergehenden Ansprüche hergestellt ist.

## Revendications

1. Additif destiné à renforcer des matrices de bitume, **caractérisé en ce qu'**il est constitué de pastilles (1) comprenant un coeur (2) composé d'une charge comprenant des fils de verre E et un film externe (3) constitué d'un matériau polymère thermofusible destiné à contenir ladite charge.

2. Additif selon la revendication 1, **caractérisé en ce que** ledit fil de verre E est constitué d'un agglomérat de fil de verre E préparé à faible pression et à froid.

3. Additif selon les revendications 1 ou 2, **caractérisé en ce que** le matériau thermofusible possède une température de fusion inférieure à 100°C.

4. Additif selon l'une ou plusieurs des revendications précédentes, **caractérisé en ce que** ledit matériau thermofusible est un polymère d'éthylène-vinylamide ou d'éthylène-acétate de vinyle.

5. Additif selon l'une ou plusieurs des revendications précédentes, **caractérisé en ce que** ladite charge contient aussi des fils de verre E avec un liant urée.

6. Additif selon l'une ou plusieurs des revendications précédentes, **caractérisé en ce que** lesdits fils de verre ont un diamètre de 10-14 µm et une longueur allant de 500 µm à 5 mm.

7. Additif selon l'une ou plusieurs des revendications précédentes, **caractérisé en ce que** lesdites pastilles (1) comprennent 25-75% en poids de matériau formant ledit coeur (2) et 1-8% en poids de polymère formant ledit film (3).

8. Additif selon la revendication 7, **caractérisé en ce que** lesdites pastilles (1) contiennent 2-4% en poids du film (3).

9. Additif selon l'une ou plusieurs des revendications précédentes, **caractérisé en ce que** les pastilles (1) ont un diamètre de 4-8 mm et une longueur de 4-15 mm.

10. Méthode de préparation de l'additif selon l'une ou plusieurs des revendications précédentes, **caractérisée en ce que** la thermofusion par friction dudit matériau polymère thermofusible est effectuée en faisant passer ledit matériau à travers une filière, de façon à déterminer la formation de pastilles (1) obtenues par enroulement dudit matériau fondu sous la forme d'un film (3) revêtant le matériau dudit coeur (2).

11. Méthode de préparation d'une matrice de bitume avec l'additif selon l'une ou plusieurs des revendications 1 à 9, **caractérisée en ce que** le chauffage dudit film de matériau thermofusible (3) qui revêt les pastilles (1) est effectué, en solubilisant ledit film afin de libérer le matériau dudit coeur (2), modifiant ainsi le bitume et libérant simultanément le fil de verre.

12. Matrice de bitume, **caractérisée en ce qu'**elle est obtenue avec l'additif et avec la méthode selon l'une ou plusieurs des revendications précédentes.
